Europäisches Patentamt

European Patent Office

Office européen des brevets

(19)

(11) Numéro de publication: **0 047 698**
**B1**

(12) **FASCICULE DE BREVET EUROPEEN**

(45) Date de publication du fascicule du brevet: **18.12.85**

(21) Numéro de dépôt: **81401371.0**

(22) Date de dépôt: **01.09.81**

(51) Int. Cl.⁴: **G 21 C 1/02,** G 21 C 15/24

(54) Réacteur nucléaire à circulation du fluide primaire de refroidissement par convection mixte.

(30) Priorité: **04.09.80 FR 8019108**

(43) Date de publication de la demande:
**17.03.82 Bulletin 82/11**

(45) Mention de la délivrance du brevet:
**18.12.85 Bulletin 85/51**

(84) Etats contractants désignés:
**BE DE GB IT NL**

(56) Documents cités:
**DE-B-1 257 157**
**FR-A-1 511 662**
**FR-A-1 525 183**
**FR-A-2 346 816**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Martin, Robert
Le Francillon
F-38690 Longechenal (FR)**
Inventeur: **Menant, Bernard
28 Place Louis Jouvet
F-38100 Grenoble (FR)**

(74) Mandataire: **Mongrédien, André et al
c/o BREVATOME 25, rue de Ponthieu
F-75008 Paris (FR)**

Courier Press, Leamington Spa, England.

EP 0 047 698 B1

## Description

La présente invention a pour objet un réacteur nucléaire à neutrons rapides comportant une cuve suspendue contenant un volume d'un métal liquide primaire de refroidissement, un coeur immergé dans le métal liquide, des échangeurs de chaleur immergés dans le métal liquide et répartis à la périphérie de la cuve, chaque échangeur comportant un faisceau de tubes dans lesquels circule un fluide secondaire, le fluide primaire circulant entre les tubes du faisceau, une virole entourant le faisceau de tubes sur une partie de sa hauteur, cette virole comportant une entrée et une sortie pour le métal liquide, des pompes de circulation immergées dans le métal liquide et aspirant ce métal pour le refouler à la base du coeur de manière à provoquer une circulation ascendante de ce métal à travers le coeur, un déflecteur entourant le coeur.

On connaît (FR—A—1 511 662 et FR—A—1 525 183) des réacteurs nucléaires à neutrons rapides intégrés, c'est-à-dire des réacteurs pour lesquels les échangeurs et les pompes primaires sont disposés dans une cuve qui contient tout le sodium du circuit primaire, ce qui présente des avantages importants de compacité, de sécurité, de bon refroidissement et de confinement du fluide actif. Ces réacteurs comportent une cuve dont le coeur, disposé dans la cuve, est immergé sous un volume convenable d'un métal liquide en circulation assurant son refroidissement par extraction des calories dégagées par la fission nucléaire dans les assemblages combustibles formant ce coeur.

La cuve contenant le métal liquide, de forme générale cylindrique à fond sensiblement sphérique, est ouverte en partie haute et suspendue avec son axe verticale sous une dalle supérieure de protection fermant cette cuve et assurant la protection de l'environnement extérieur, cette dalle reposant par sa périphérie sur une portée d'appui prévue dans un caisson à paroi épaisse généralement en béton, délimitant une cavité recevant la cuve. La dalle supporte, outre un système de bouchons tournants disposé à la verticale du coeur et portant des moyens permettant d'accéder à celui-ci pour en assurer le contrôle et procéder à la manutention des assemblages combustibles, un ensemble d'échangeurs de chaleur et de pompes de circulation, répartis autour du coeur et plongeant après traversée de la dalle dans le volume de métal liquide contenu dans la cuve. Le métal liquide chaud à la sortie du coeur parcourt les échangeurs où il cède les calories acquises puis est repris une fois refroidi, dans la cuve par les pompes qui le renvoient sous une pression suffisante sous le coeur pour un nouveau passage à travers celui-ci.

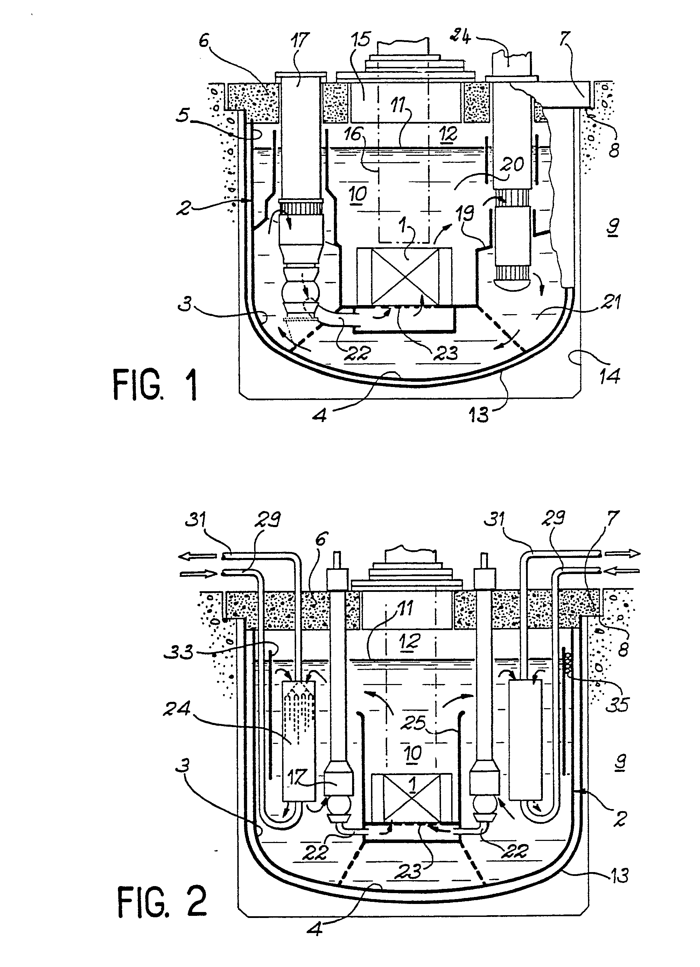

On a représenté sur la figure 1, un réacteur nucléaire connu de ce type. La référence 1 désigne le coeur du réacteur nucléaire. Ce coeur 1 est disposé à l'intérieur d'une cuve 2, dite cuve principale, comportant notamment une virole latérale cylindrique 3 à axe vertical et un fond inférieur de forme générale sphérique 4. A son extrémité supérieure 5 la virole 3 est encastrée et suspendue sous une dalle horizontale 6, de notable épaisseur, fermant la cuve, cette dalle 6 comportant à sa périphérie un épaulement 7, apte à venir reposer sur une portée d'appui correspondante 8 d'un caisson 9 en béton entourant le réacteur. La cuve 2 contient un volume convenable d'un métal liquide, généralement du sodium, dans lequel est immergé le coeur 1, le niveau supérieur 11 de ce volume de sodium dans la cuve étant lui-même surmonté sous la dalle 6 d'une atmosphère 12 de gaz inerte, généralement de l'argon. La cuve 2 est par ailleurs doublée extérieurement d'un seconde cuve à paroi parallèle 13, dite cuve de sécurité, permettant en cas d'accident sur la cuve principale 2, d'éviter que le sodium contenu dans celle-ci ne se répande, notamment à l'intérieur de la cavité 14 ménagée dans le caisson 9 et dans laquelle est disposé l'ensemble formé par les cuves 2 et 13.

La dalle horizontale 6 fermant la partie supérieure de la cuve principale comporte, de façon connue, sensiblement au droit du coeur 1, un système de bouchons tournants 15, permettant à des organes de contrôle, de commande et de manutention, schématisés par la référence 16 et disposés sous les bouchons tournants 15 d'accéder au coeur 1 et de procéder dans celui-ci à certaines opérations nécessaires à son fonctionnement ou à son entretien. La dalle 6 supporte par ailleurs, répartis dans la cuve 2 sous le niveau 11 du sodium 10 qu'elle contient, des pompes de circulation 17 et des échangeurs de chaleur 24, permettant au sodium 10 de circuler à l'intérieur de la cuve 2. Notamment, le coeur 1 est disposé à l'intérieur d'une cuve supplémentaire ou cuve interne 19, délimitant, dans la cuve principale 2, deux régions séparées, respectivement 20 et 21, le sodium chaud sortant du coeur et ayant acquis à la traversée de celui-ci les calories dégagées par la fission nucléaire, étant repris par les échangeurs 24 puis une fois refroidi à la sortie de ces derniers dans la région 21, aspiré par les pompes 14 pour être renvoyé par des conduits de forte section 22 dans un sommier 23 supportant le coeur 1, afin d'assurer un nouveau passage à travers celui-ci.

Cependant, de tels réacteurs présentent l'inconvénient d'avoir des structures relativement complexes, et de conduite à des dimensions importantes, en particulier pour le diamètre de la cuve. Il en résulte un coût de fabrication important car la cuve et les structures internes doivent être réalisées en acier inoxydable de qualité nucléaire, dont le coût est élevé.

L'invention se rapporte à un réacteur nucléaire de type intégré qui permet de réduire ces inconvénients.

Ce but est atteint grâce aux caractéristiques figurant dans la partie caractérisante de la revendication 1.

Ces dispositions permettent de réduire la masse de métal utilisée pour la construction du réacteur (suppression des viroles intermédiaires) et une réduction du diamètre de la cuve. Il en résulte une réduction du coût de construction du réacteur.

D'autres caractéristiques et avantages de l'invention apparaîtront plus clairement après lecture de la description qui suit, donnée à titre illustratif et nullement limitatif, en référence aux dessins annexés, sur lesquels:

— la figure 2 représente une vue en coupe d'un réacteur nucléaire à neutrons rapides de type intégré conforme à l'invention:

— les figures 3 et 4 représentent respectivement une vue longitudinale en coupe et une vue de dessus d'un échangeur conforme à l'invention.

On a représenté sur la figure 2 une coupe d'un réacteur nucléaire conforme à l'invention. Bien que ce réacteur soit d'un type différent de celui de la figure 1, on a désigné par des références identiques les parties de ce réacteur correspondant à celles du réacteur représenté sur la figure 1. Le coeur 1, immergé dans le sodium liquide 10 contenu dans la cuve principale 2, est entouré par un déflecteur 25. Des pompes 17 sont disposées concentriquement au coeur. Ces pompes peuvent être par exemple identiques à celles qui équipent le réacteur français Phènix. Elles aspirent le sodium 10 et l'envoient par des conduits de forte section 22 dans le sommier 23 supportant le coeur 1 afin d'assurer son passage au travers de celui-ci.

Autour des pompes 17 sont disposés des échangeurs intermédiaires de chaleur 24. Ces échangeurs sont répartis sur un cercle concentrique à celui des pompes 17. Les échangeurs intermédiaires 24 permettent un échange de chaleur entre le sodium chaud sortant du coeur 1 et le fluide du circuit secondaire, par exemple du sodium liquide, qui est ensuite dirigé vers un générateur de vapeur (non représenté). Des pompes extérieures au bloc réacteur (non représentées) assurent la circulation du fluide secondaire dans le circuit secondaire. Le fluide secondaire est amené à l'échangeur intermédiaire 24 par une canalisation de forte section 29, puis après avoir traversé l'échangeur, il en est évacué par une autre canalisation 31 également de forte section. Un baffle 33 est disposé à l'intérieur de la cuve 2 à sa partie supérieure.

Selon un premier mode de réalisation de l'invention, représenté sur la partie droite de la figure 2, la canalisation 29 d'arrivée du fluide de refroidissement secondaire passe à l'intérieur du cercle de la virole 33. Cette solution présente l'avantage de permettre le démontage de l'échangeur 24. En effet, en cas d'avarie, on peur le retirer de la cuve en le faisant passer au travers d'un trou pratiqué dans la dalle 6, ce trou étant obturé par un bouchon au cours du fonctionnement normal du réacteur. Pour cette solution, il est nécessaire de refroidir le baffle 33. Ce refroidissement est assuré au moyen d'un serpentin de refroidissement 35 fixé sur le baffle 33.

Selon un second mode de réalisation représenté sur la partie gauche de la figure 2, la canalisation 29 par laquelle le sodium froid pénètre dans la cuve passe entre la cuve principale 2 et le baffle 33. Le refroidissement de la partie supérieure de la cuve est alors assuré par le fluide secondaire froid.

Contrairement au premier mode de réalisation, l'échangeur de chaleur tel qu'il est disposé dans ce second mode de réalisation n'est pas démontable. En effet, le baffle 33 retient l'échangeur à l'intérieur de la cuve.

La circulation du sodium 10 est la suivante. Le sodium chaud sortant de 1 s'étale pres de la surface libre 11, sur une hauteur de 1 m environ, et alimente les échangeurs intermédiaires 24 après avoir traversé le cercle des pompes 17. Le sodium primaire froid est aspiré à la partie inférieure de la cuve 2 par les pompes 17. La circulation de ce sodium primaire s'effectue de haut en bas, par convection mixte, c'est-à-dire par convection naturelle et par les pompes 17 assurant l'entrée du sodium liquide dans le coeur de réacteur 1. La circulation du fluide secondaire s'effectue à contre-courant de la circulation du fluide primaire, c'est-à-dire de bas en haut, sous l'action des pompes de circulation extérieure.

Dans l'exemple de realisation décrit, les pompes de circulation 17 sont du même type que celles qui sont utilisées pour le réacteur français Phénix. Elles sont au nombre de seize à vingt. Ces pompes pourraient être également d'un autre type intermédiaire entre les pompes du réacteur Phénix et celles du réacteur Superphénix. Dans ce cas, huit pompes sont suffisantes pour assurer la circulation du sodium primaire 10.

Les échangeurs intermédiaires 24 sont au nombre de quarante-quatre.

Les différences entre le réacteur nucléaire de l'invention et le réacteur de l'art antérieur résident dans le fait que les cuves internes 19 délimitant deux régions séparées dans la cuve 2 du réacteur sont supprimées. D'autre part, le circuit de refroidissement de la cuve principale qui existait à partir du cendrier est également supprimé. Le réacteur nucléaire de l'invention apporte ainsi une simplification de la structure du bloc réacteur. D'autre part, l'invention permet une réduction de la taille de ce dernier dont le diamètre atteint actuellement 20 m pour les réacteurs nucléaires de type connu.

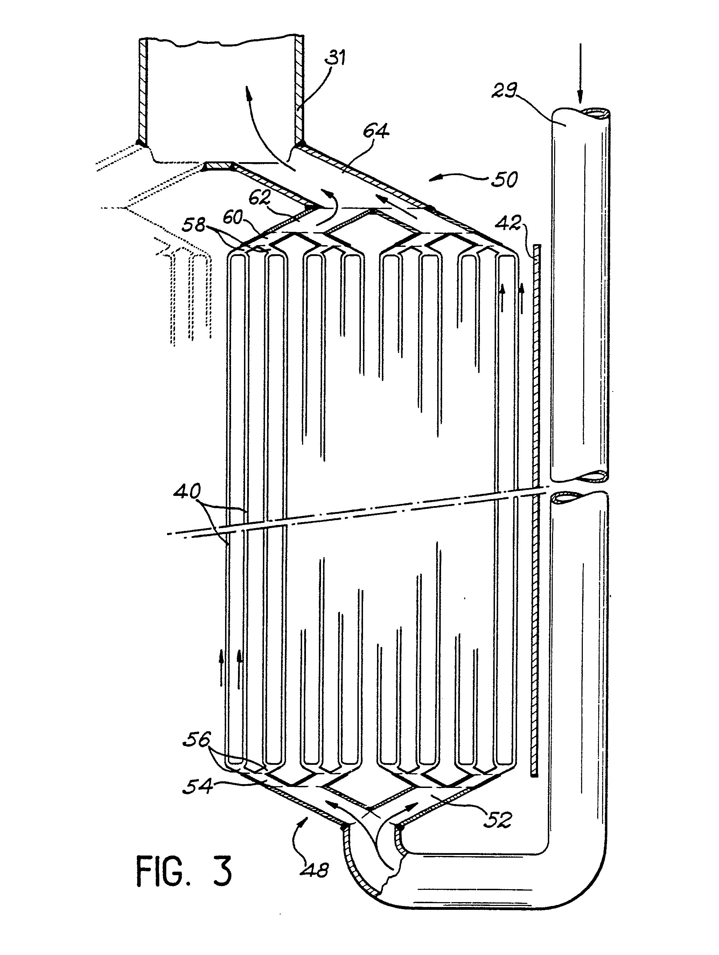

On a représenté sur la figure 3 une vue en coupe d'un échangeur intermédiaire équipant le réacteur nucléaire représenté sur la figure 2. Cet échangeur comporte un faisceau de tubes 40 parallèles et de faible section à l'intérieur desquels circule de bas en haut, le fluide du circuit secondaire.

Le fluide secondaire est amené par quatre canalisations 29 de forte section. Un collecteur d'entrée 48, raccordé à chaque canalisation 29, répartit le fluide secondaire entre les tubes du faisceau. A la partie supérieure des tubes 40, un collecteur de sortie 50 permet de collecter le fluide secondaire chaud sortant de l'échangeur 24 et de la diriger au moyen de la canalisation de forte section 31 vers le générateur de vapeur (non représenté).

Le collecteur d'entrée 48 est constitué de la manière suivante. Chaque canalisation de forte section 29 se divise en quatre canalisations 52 dont la section totale de passage est au moins égale à celle de la canalisation 29. C'est-à-dire que le diamètre d'une canalisation 52 est approximativement la moitié de celui de la canalisation 29.

Chacune des canalisations 52 se divise à son tour en quatre canalisations 54, la section de passage de ces quatre canalisations 54 étant au moins égale à celle d'une canalisation 52. Ainsi, la section totale de passage des seize canalisations 54 est supérieure à la section de passage de la canalisation 29. Enfin, chacune des canalisations 54 se divise elle-même en quatre canalisations 56 raccordées à quatre tubes 40.

Le collecteur 50 est réalisé de la même manière. Chacun des tubes 40 est raccordé à une canalisation 58 de faible diamètre. Quatre tubes 40 débouchent dans une canalisation 60, quatre canalisations 60 débouchant elles-mêmes dans une canalisation 62. Quatre canalisations 62 débouchent dans la canalisation unique 64, et enfin quatre canalisations 64 débouchent dans la conduite de forte section 31.

Le faisceau de l'échangeur 24 se compose ainsi de mille vingt quatre tubes 40 régulièrement espacés, à l'intérieur desquels le fluide secondaire circule de bas en haut.

Le fluide du circuit primaire circule autour des tubes parallèles 40 en échangeant des calories avec le fluide du circuit secondaire. Une virole extérieure 42, s'étendant sur une partie seulement de la hauteur de l'échangeur et entourant celui-ci permet notamment de supporter des grilles d'espacement des tubes du faisceau.

La circulation du sodium primaire autour des tubes 40 s'effectue par convection naturelle. En effet, le sodium chaud sortant du coeur 1 est plus léger que le sodium froid. Il a par conséquent tendance à s'élever. Par contre, le sodium primaire qui pénètre dans l'échangeur 24 se refroidit par échange de chaleur avec le sodium secondaire. Sa densité augmente, il a donc tendance à descendre le long des tubes 40 de l'échangeur. On obtient ainsi une convection mixte, c'est-à-dire une circulation par convection naturelle dont le débit est accéléré par des pompes de circulation.

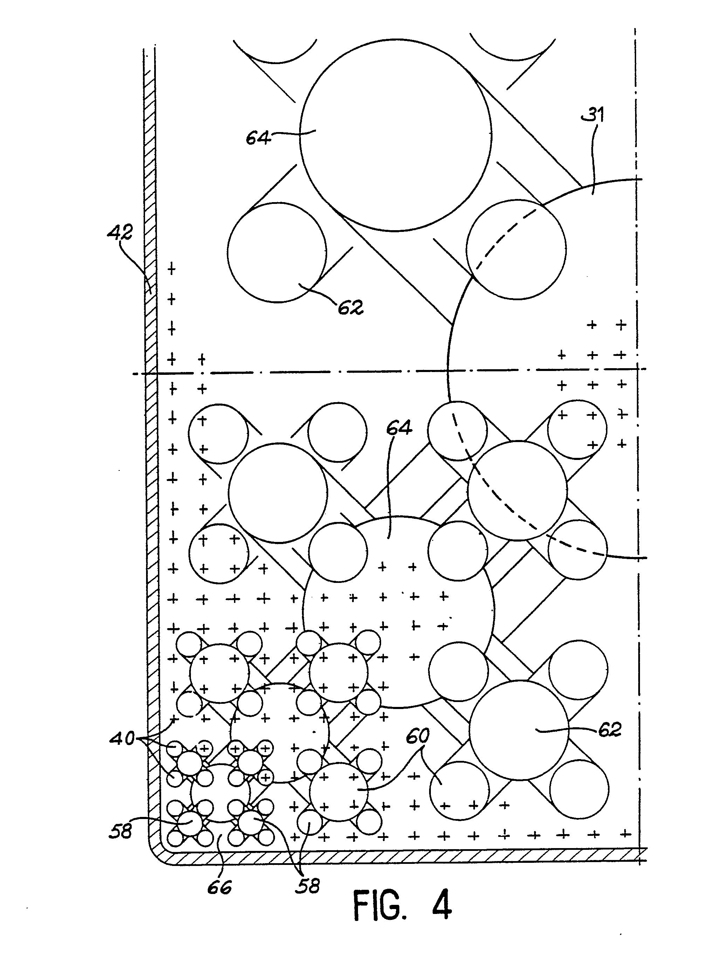

On a représenté sur la figure 4 une vue de dessus d'un échangeur de chaleur équipant un réacteur nucléaire conforme à l'invention. On remarque la disposition régulière des tubes 40 du faisceau à l'intérieur duquel circule le fluide de refroidissement secondaire, ainsi que la virole 42 entourant ce faisceau. Le fluide de refroidissement primaire circule de bas en haut dans les espaces 66 entourant les tubes 40.

## Revendications

1. Réacteur nucléaire à neutrons rapides comportant une cuve (2) suspendue contenant un volume d'un métal liquide primaire (10) de refroidissement, un coeur (1) immergé dans le métal liquide (10), des échangeurs de chaleur (24) immergés dans le métal liquide (10) et répartis à la périphérie de la cuve (2), chaque échangeur (24) comportant un faisceau de tubes (40) dans lesquels circule un fluide secondaire, le fluide primaire (10) circulant entre les tubes (40) du faisceau, une virole (42) entourant le faisceau de tubes sur une partie de sa hauteur, cette virole comportant une entrée et une sortie pour le métal liquide (10), des pompes de circulation (17) immergées dans le métal liquide (10) et aspirant ce métal pour le refouler à la base du coeur (1) de manière à provoquer une circulation ascendante de ce métal à travers le coeur, un déflecteur (25) entourant le coeur, caractérisé en ce que ledit déflecteur (25) s'élève jusqu'à une hauteur telle que le métal liquide chaud sortant du coeur s'étale près de la surface libre (11) du métal liquide dans la cuve (2), et en ce que la circulation du métal liquide autour des tubes (40) s'effectue par convection naturelle, de manière à permettre une circulation descendante du métal liquide (10) entre les tubes (40) du faisceau, la séparation du métal liquide chaud et froid du circuit primaire s'effectuant par différence de densité.

2. Réacteur nucléaire selon la revendication 1, caractérisé en ce que chaque échangeur (24) comporte une canalisation d'entrée (29) et une canalisation de sortie (31) pour le fluide secondaire, un collecteur d'entrée (48) entre la canalisation d'entrée (29) et le faisceau de tubes (40) et un collecteur de sortie (50) entre le faisceau de tubes (40) et la canalisation de sortie (31), les collecteurs d'entrée (48) et de sortie (50) étant constitués chacun par une formation arborescente de tubes (52, 54, 56, 58, 60, 62) comportant plusieurs niveaux successifs, un tube se divisant, côté entrée, en plusieurs tubes au niveau suivant, et les tubes d'un niveau supérieur se regroupant, côté sortie, la section de passage du fluide variant peu d'un niveau à l'autre, et une virole (42) entourant le faisceau de tubes (40) sur une partie de sa hauteur.

3. Réacteur nucléaire selon l'une quelconque des revendications 1 et 2, caractérisé en ce qu'il comporte un baffle (33) le long de la virole latérale cylindrique (3) de la cuve, ce baffle (33) étant muni dans sa partie supérieure d'un serpentin de refroidissement (35).

4. Réacteur nucléaire selon l'une quelconque des revendications 1 et 2, caractérisé en ce que la canalisation d'amenée (29) du fluide secondaire passe entre le baffle (33) et la virole (3) de la cuve (2).

## Patentansprüche

1. Schneller Reaktor mit einem aufgehängten Behälter (2), der ein primäres Flüssigmetallvolumen (10) zum Kühlen enthält, einem in dem Flüssigmetall (10) untergetauchten Kern (1), in dem Flüssigmetall (10) untergetauchten und über den Umfang des Behälters (2) verteilten Wärmetauschern (24), wobei jeder Wärmetauscher (24) ein Rohrbündel (40) aufweist, in dem ein Sekundärfluid strömt, und das primäre Fluid zwischen den Rohren (40) des Bündels strömt, mit einem das Rohrbündel über einen Teil seiner Höhe umgebenden Mantel (42), der einen Einlaß und einen Auslaß für das Flüssigmetall (10) aufweist, mit Umwälzpumpen (17), die in dem Flüssigmetall (10) untergetaucht sind und dieses Metall ansaugen, um es an der Unterfläche des Kernes (1) wieder zuzuführen, derart, daß eine aufsteigende Strömung in dem Metall durch den Kern hindurch hervorgerufen wird, sowie einem den Kern umgebenden Deflektor (25), dadurch gekennzeichnet, daß sich der Deflektor (25) bis zu einer solchen Höhe erhebt, daß sich das aus dem Kern austretende, heiße Flüssigmetall nahe der freien Oberfläche (11) des Flüssigmetalls in dem Behälter (2) ausbreitet, und daß die Strömung des Flüssigmetalls um die Rohre (40) herum durch natürliche Konvektion erfolgt, derart, daß eine absteigende Strömung des Flüssigmetalls (10) zwischen den Rohren (40) des Bündels ermöglicht wird, wobei die Trennung des heißen und des kalten Flüssigmetalls der Primärströmung durch Dichteunterschied erfolgt.

2. Reaktor nach Anspruch 1, dadurch gekennzeichnet, daß jeder Wärmetauscher (24) umfaßt eine Einlaßleitung (29) und eine Auslaßleitung (31) für das Sekundärfluid, einen Einlaßsammler (48) zwischen der Einlaßleitung (29) und dem Rohrbündel (40) und einen Auslaßsammler (50) zwischen dem Rohrbündel (40) und der Auslaßleitung (31), wobei der Einlaßsammler (48) und der Auslaßsammler (50) jeweils von einer baumartigen Verzweigung von Rohren (52, 54, 56, 58, 60, 62) gebildet ist, die mehrere aufeinanderfolgende Höhenlagen aufweist, wobei sich einlaßseitig eine Leitung in mehrere Leitungen auf der folgenden Höhenlage verzweigt und die Leitungen auslaßseitig wieder zusammengeführt werden, wobei sich der Fluiddurchtrittsquerschnitt wenig von einer Höhenlage zur anderen ändert sowie einen Mantel (42), der das Rohrbündel (40) über einen Teil seiner Höhe umgibt.

3. Reaktor nach Anspruch 1 oder 2, dadurch gekennzeichnet, daß er ein Baffle (33) längs des seitlichen, zylindrischen Mantels (3) des Behälters aufweist, wobei dieser Baffle (33) in seinem oberen Abschnitt mit einer Kühlschlange (35) ausgerüstet ist.

4. Reaktor nach Anspruch 1 oder 2, dadurch gekennzeichnet, daß die Zuführleitung (29) für das Sekundärfluid zwischen dem Baffle (33) und dem Mantel (3) des Behälters (2) hindurchgeht.

**Claims**

1. Fast neutron reactor comprising a suspended tank (2) containing a volume of liquid metal primary coolant (10), a core (1) immersed in the liquid metal (10), heat exchangers (24) immersed in the liquid metal (10) and distributed around the circumference of the tank (2), each exchanger (24) comprising a bundle of tubes (40) in which circulates a secondary fluid, the primary fluid (10) circulating between the tubes (40) of the bundle, a jacket (42) surrounding the tube bundle over a part of its height, said jacket comprising an inlet and an outlet for the liquid metal (10), circulation pumps (17) immersed in the liquid metal (10) pumping the metal to flow through the base of the core (1) whereby to produce a rising circulation of the metal through the core, and a deflector (25) surrounding the core, characterized in that said deflector (25) extends to a height such that hot metal liquid leaving the core spreads out near the free surface (11) of liquid metal in the tank (2), and in that circulation of the liquid metal around the tubes (40) is produced by natural convection, whereby to establish a descending circulation of liquid metal (10) between the tubes (40) of the bundle, separation of hot and cold liquid metal of the primary circuit being produced by density differences.

2. Nuclear reactor according to Claim 1, characterized in that each heat exchanger (24) comprises an inlet conduit (29) and an outlet conduit (31) for the secondary fluid, an inlet manifold (48) between the inlet conduit (29) and the tube bundle (40) and an outlet manifold (50) between the tube bundle and the outlet conduit (31), the inlet and outlet manifolds (48, 50) each being constituted by a branching arrangement of tubes (52, 54, 56, 58, 60, 62) comprising a plurality of successive levels, each tube dividing on the inlet side into a plurality of tubes on the following level, and the tubes of an upper level being joined together at the outlet side, the cross-section for passage of fluid exhibiting little variation from one level to another, and a jacket (42) surrounding the tube bundle (40) over a part of its height.

3. Nuclear reactor according to either of Claims 1 and 2, characterized in that it comprises a baffle (33) extending along the cylindrical side wall (3) of the tank, said baffle (33) having a cooling coil (35) in its upper part.

4. Nuclear reactor according to either of Claims 1 and 2, characterized in that the inlet conduit (29) for secondary fluid passes between the baffle (33) and the wall (3) of the tank (2).

FIG. 1

FIG. 2

FIG. 3

FIG. 4